# EUROPÄISCHE PATENTSCHRIFT

(11) **EP 2 568 551 B1**
(45) Veröffentlichungstag und Bekanntmachung des Hinweises auf die Patenterteilung: **05.04.2017**
(21) Anmeldenummer: 11007284.0
(22) Anmeldetag: 07.09.2011
(51) Int. Cl.: H02G 3/04, A62C 3/16

(54) **Kabelpritsche und Installationssatz mit Funktionserhalt im Brandfall**
Cable tray and installation kit which remains functional in cases of fire
Goulotte de câbles et ensemble d'installation qui reste fonctionnelle en cas d'incendie

(43) Veröffentlichungstag der Anmeldung: 13.03.2013
(73) Patentinhaber: Woertz AG, 4132 Muttenz 1 (CH)
(72) Erfinder: Onodi, Tamas, 8800 Thalwil (CH)
(74) Vertreter: Samson & Partner Patentanwälte mbB

(56) Entgegenhaltungen:
- EP-A1- 0 844 713
- EP-A2- 1 429 436
- DE-U1-202006 012 624
- US-A1- 2009 126 989
- US-B1- 6 959 898

## Beschreibung

### Gebiet der Erfindung

Die Erfindung betrifft eine Kabelpritsche, einen Installationssatz mit der Kabelpritsche sowie eine elektrische Installation des Installationssatzes mit Funktionserhalt im Brandfall.

### Hintergrund der Erfindung

Kabelpritschen dienen zum Verlegen von elektrischen Kabeln, beispielsweise entlang von oder auch zwischen Wänden, Böden oder Decken von Gebäuden. Ebenso werden Kabelpritschen z.B. bei technischen Anlagen und großen Maschinen verwendet, um Kabel zwischen verschiedenen Anlagen- bzw. Maschinenteilen überzuführen.

Hierzu besitzt eine Kabelpritsche ein Bett auf dem sich Kabel auflegen lassen, sodass sie durch die Kabelpritsche gestützt sind. Das Bett ist herkömmlich z.B. aus Metallblech gefertigt.

Bei elektrischen Installationen mit Kabelpritschen sind im Brandfall sowohl die Kabel als auch die Kabelpritsche der Brandeinwirkung ausgesetzt. Hierbei wird die Eignung der elektrischen Installation zur Stromversorgung auch unter Brandeinwirkung i.a. als "Funktionserhalt" (engl.: "Circuit Integrity") bezeichnet. Der Funktionserhalt ist durch verschiedene Normen standardisiert.

Beispielsweise werden Kabel gemäß der Norm IEC 60331-11/-21/-23/-25 mit Spannung beaufschlagt und unter Flammeneinwirkung einer Temperatur größer 750°C über 90-180 Min. ausgesetzt. Nach einiger Zeit verlieren die Aderisolationen des Kabels aufgrund der Flammeneinwirkung ihre Isolationsfähigkeit und es kommt zum Kurzschluss zwischen Kabeladern; dies bedeutet Funktionsverlust. Hierbei ist also der Funktionsverlust durch den Isolationsverlust bedingt. Dementsprechend ist der Funktionserhalt (eines Kabels) im Wesentlichen durch den Isolationserhalt des Kabels bestimmt. Das Verhalten unter diesem Test wird mit der Angabe der Dauer des Isolationserhalts in Minuten angegeben. Das Verhalten unter diesem Test wird mit der Angabe der Dauer des Funktionserhalts in Minuten angegeben. Ähnliche Normen sind BS 6387 cat. C und VDE 0472-814.

Andere Normen betreffen den Funktionserhalt von Kabeln unter Einwirkung von Feuer und Wasser (womit z.B. die Wirkung von Sprinkleranlagen bei einem Brand dargestellt werden soll), so z.B. DS 6387 cat. W und VdS 3423. Weitere Normen betreffen Funktionserhalt von Kabeln unter Einwirkung von Feuer und mechanischen Stößen (womit beispielsweise die Wirkung von auf das Kabel herunterfallenden Teilen dargestellt werden soll, wie es bei einem Brand oft vorkommt), so EN 50200, EN 50362, und ES 6387 cat. Z.

Daneben gibt es Normen, welche den Funktionserhalt nicht nur von Kabeln, sondern ganzer Installationen betreffen. Dies bezeichnet man auch als "System-Funktionserhalt" (engl.: "System Circuit Integrity"). Beim System-Funktionserhalt sind neben dem Kabel auch z.B. Kabelpritschen und weitere tragende Elemente (wie Kabelbefestigungen, -aufhängungen und -führungen) und elektrische Verbindungselemente (wie Verzweigungs- und Anschlussvorrichtungen) einbezogen, denn sie alle zusammen gewährleisten den Funktionserhalt einer gesamten Installation. Eine den System-Funktionserhalt betreffende Norm ist beispielsweise DIN 4102 Teil 12. Bei einem Test nach dieser Norm erfolgt die Beflammung und damit Erhitzung einer Gesamtinstallation auf einer Länge von 3 m gemäß einer bestimmten ansteigenden Einheitstemperaturkurve, die zunächst relativ steil ansteigt und dann immer flacher verläuft, bis sie nach 90 Min. ca. 900°C erreicht. Das Verhalten unter diesem Test wird durch "E" mit der Angabe der Dauer des Funktionserhalts in Minuten angegeben. "E90" bedeutet also System-Funktionserhalt über 90 Min.

Übliche Kabel erfüllen solche Funktionserhaltbedingungen nicht, da unter der Brandeinwirkung deren Isolationen rasch schmelzen oder abbrennen und es dann durch Leiterberührung zum Kurzschluss kommt. Es bedarf daher zur Kurzschlussvermeidung spezieller Ausrüstungen, beispielsweise spezieller Isolationen.

Um den relativ hohen Anforderungen, die die Systemfunktionserhalt-Normen stellen, gerecht zu werden, bedarf es jedoch mehr als nur Kabel geeigneter Funktionserhaltdauer. Vielmehr ist erforderlich, dass auch die Kabelpritsche gleichfalls den Funktionserhalt im Brandfall unterstützt. Unter Hitzeeinwirkung lässt die Tragkraft üblicher Kabelpritschen nach und sie biegen durch, sodass ein auf ihnen gelagertes Kabel durchhängt. Hieraus resultieren mechanische Spannungen im Kabel, die zur Aderberührung und damit zum Kurzschluss führen, sodass sich die Funktionserhaltdauer des Systems verkürzt. Deshalb werden herkömmliche Kabelpritschen mit geringer Länge hergestellt und/oder zumindest unter Verwendung zahlreicher Halterungen (Stützen) mit kurzen Abständen montiert.

Die Druckschrift DE 20 2006 012624 U1 beschreibt eine Kabelbandage, die auf einer Seite mit einem Ablationsbaustoff und auf ihrer anderen Seite mit einer Kunststoff- oder Metallschicht versehen ist.

Die Druckschrift US 2009/0126989 A1 beschreibt einen Überwurf für Kabel, der eine Fiberglassschicht und eine Siliziumschaumschicht aufweist.

Die Druckschrift EP 0 844 713 A1 beschreibt einen Kabelkanal mit einem Boden aus Fiberglassgewebe und flammwidrigem Polyesterkunststoff, wobei Querbalken im Kabelkanal zum Abstützen von Kabeln vorgesehen sind.

Die Druckschrift EP 1 429 436 A2 beschreibt einen Kabelkanal mit einer Außenwand und einer Innenwand, jeweils aus Metallblech, und lose dazwischen gelegten Brandschutzplatten.

### Kurzfassung der Erfindung

Die vorliegende Erfindung stellt eine Kabelpritsche mit Funktionserhalt im Brandfall bereit, die ein Bett zum Auflegen und Abstützen eines oder mehrerer Kabel umfasst. Dieses Bett erstreckt sich über die Länge der Kabelpritsche. Hierbei ist das Bett mit einem feuerfesten Textilgewebe aufgebaut, das in einem Harz eingegossen ist. Das Textilgewebe ist bezogen auf die Längsrichtung der Kabelpritsche beidseitig mit einem brandfesten Querträger versehen und an diesem brandsicher befestigt. Hierdurch erstreckt sich das Textilgewebe im Brandfall zwischen den Querträgern nach Art einer Hängematte und unterstützt das bzw. die Kabel weiterhin.

Ein anderer (nebengeordneter) Aspekt betrifft einen Installationssatz für eine elektrische Installation mit Funktionserhalt im Brandfall mit wenigstens einer solchen Kabelpritsche. Außerdem umfasst der Installationssatz wenigstens ein Flachkabel mit mehreren, parallel nebeneinander in einer Ebene verlaufenden Stromadern. Hierbei ist das Flachkabel ein Brandsicherheitskabel mit Funktionserhalt im Brandfall. Außerdem umfasst der Installationssatz wenigstens zwei Pritschenhalterungen zum Montieren der wenigstens einen Kabelpritsche, wobei die Pritschenhalterungen zur Befestigung an den Querträgern vorgesehen sind.

Ein weiterer (nebengeordneter) Aspekt betrifft eine elektrische Installation mit Funktionserhalt im Brandfall, die einen solchen Installationssatz umfasst, wobei das Flachkabel auf der Kabelpritsche aufliegt. Hierbei ist die wenigstens eine Kabelpritsche montiert, indem sie mit den Querträgern jeweils an einer Pritschenhalterung befestigt ist.

### Allgemeine Beschreibung der Kabelpritsche, des Installationssatzes und deren fakultative Ausgestaltungen

Die Kabelpritsche ist für ein oder mehrere Kabel und/oder auch ein oder mehrere Kabelbündel vorgesehen. Zur besseren Übersicht ist jedoch die nachfolgende Beschreibung, sofern nicht anders genannt, exemplarisch auf nur ein Kabel bezogen formuliert.

Mit der Kabelpritsche lässt sich das Kabel verlegen, indem die Kabelpritsche mit dem Bett zum Auflegen und Abstützen des Kabels ausgerüstet ist. Das Bett erstreckt sich im Wesentlichen über die Länge der Kabelpritsche, sodass das Kabel über die gesamte Pritschenlänge unterstützt wird. Bei elektrischen Installationen, die später beschrieben werden, lassen sich auch mehrere Kabelpritschen entlang ihrer Längsrichtung hintereinander angeordnet montieren, um Kabel über (beliebig) größere Distanzen zu führen. Im Übrigen bezieht sich hier und nachfolgend "Länge" bzw. "Längsrichtung" auf die Längsrichtung des Kabels in seiner auf der Kabelpritsche verlegten Lage.

Die Kabelpritsche ist mit Funktionserhalt im Brandfall vorgesehen. Das bedeutet jedoch, dass im Brandfall der Funktionserhalt des Systems aus Kabel, Kabelpritsche und Pritschenhalterung zu gewährleisten ist. Somit ist hier besondere der zuvor genannte System-Funktionserhalt relevant.

Für den Funktionserhalt ist das Bett mit dem feuerfesten Textilgewebe ausgerüstet, das in Harz eingegossen ist. Zwar trägt im Brandfall das Harz zur Brandlast bei, doch wird dieser Nachteil in Kauf genommen, da dieses Verbundmaterial aus Textilgewebe und Harz im Brandfall den Vorteil besitzt, dass das Textilgewebe unter Feuereinwirkung sich nicht wie Metallblech herkömmlicher Kabelpritschen stark dehnt oder sogar fließt, sodass sich eine deutlich geringeres Durchbiegen, genauer Durchhängen, im Brandfall erzielen lässt.

"Feuerfest" heißt, dass auch unter Feuereinwirkung, insbesondere gemäß den System-Funktionserhalt-Bedingungen entsprechender Normen, das Textilgewebe hinsichtlich seiner mechanischen und thermischen Belastbarkeit seine Tragkraft zum Abstützen des Kabels behält, und zwar auch dann, wenn das Harz vollständig abgebrannt ist. Im Übrigen wird nachfolgend, sofern nicht anders genannt, davon ausgegangen, dass "im Brandfall" das Harz vollständig abgebrannt ist. Zudem bezeichnet "Normalbetrieb" einen Zustand, bei dem keine Feuereinwirkung stattfindet und auch noch nicht stattgefunden hat, also den Zustand vor einem Brandfall.

Außerdem ist, falls nicht anders genannt, der Begriff "Bett" auf den Normalbetrieb bezogen, bei dem das Textilgewebe (noch) in Harz eingegossen ist. Allerdings ist die Kabelpritsche auch dafür vorgesehen, dass beim oder nach dem Brandfall das Kabel weiterhin (mit Funktionserhalt) auf ihr gebettet ist. In diesem Fall (Brandfall) ist dann das Bett jedoch derart verändert, dass es aus dem feuerfestem Textilgewebe ohne Harz, also harzfrei, aufgebaut ist.

Im Normalbetrieb schützt das Harz einerseits das Textilgewebe vor äußeren Einflüssen wie etwa mechanische Beschädigungen oder Verwitterung und andererseits auch das Kabel vor Schädigungen durch das Textilgewebe hindurch. Zudem verstärkt das Harz die Steifigkeit des Betts und trägt so zur besseren Handhabbarkeit der Kabelpritsche sowie zur Abstützung und Führung des Kabels im installierten Zustand der Kabelpritsche bei.

Im Brandfall kann, wie zuvor genannt, mitunter das Harz vollständig abbrennen, sodass dann das Bett seine Steifigkeit aufgrund des Harzes verliert. Um das Kabel hierbei dennoch zuverlässig zu stützen, ist das Textilgewebe bezogen auf die Längsrichtung der Kabelpritsche beidseitig mit jeweils einer brandfesten Befestigungseinrichtung in Form eines Querträgers verbunden. Dadurch erstreckt sich das Textilgewebe dann, wenn das Harz abgebrannt ist, zwischen den Befestigungseinrichtungen nach Art einer Hängematte und unterstützt das Kabel weiterhin.

Allerdings kommt es im Brandfall ein Stück weit zum Durchhängen des Textilgewebes (aufgrund des fehlenden, abgebrannten Harzes), sodass auch das hierauf abgestützte Kabel eine gewisse Durchbiegung erfährt. Hierdurch können sich jedoch in dem Kabel mechanische Spannungen aufbauen, die zu einer Aderberührung führen, wenn im Brandfall die Aderisolierung ebenfalls abbrennt.

Daher ist das Textilgewebe vorteilhafterweise so befestigt, dass sein Durchhängen im Brandfall möglichst gering gehalten wird, quasi die Hängematte straff gespannt bleibt. Hierzu umfasst der Installationssatz wenigstens zwei Pritschenhalterungen zum Montieren der wenigstens einen Kabelpritsche. Diese Pritschenhalterungen sind zur Befestigung an den Befestigungseinrichtungen vorgesehen. Wie zuvor genannt, ist auch das Textilgewebe mit den Befestigungseinrichtungen verbunden. Somit ist das Textilgewebe mittels der brandfesten Befestigungseinrichtungen schließlich an den Pritschenhalterungen befestigt, sodass es auch im Brandfall zuverlässig gehalten ist.

Nachfolgend werden verschiedene Aspekte hinsichtlich unterschiedlicher Kabeltypen dargestellt, wobei dies besonders hinsichtlich des später erläuterten Installationssatzes relevant ist.

Bei üblichen Rundkabeln sind die Adern miteinander verdrillt. Im Brandfall kommen daher nach dem Abbrennen der Aderisolation die Aderleiter an den Kreuzungspunkten aufeinander zu liegen. Beim Flachkabel verlaufen Aderleiter hingegen ohne Kreuzungspunkte im Kabel. Daher verhält sich ein Flachkabel hinsichtlich der Kurzschlussgefahr von vornherein günstiger. Zudem hat ein Flachkabel praktisch keine inneren Spannungen, wie sie für verdrillte Rundkabel typisch sind, hat also keine ausgeprägte Tendenz wie das Rundkabel, sich beim Verbrennen der Isolation zu verwerfen. Ein Flachkabel ist daher grundsätzlich besonders für Funktionserhalt im Brandfall geeignet.

Dementsprechend umfasst der Installationssatz ein Brandsicherheitskabel in Form eines Flachkabels mit mehreren, parallel nebeneinander in einer Ebene verlaufenden Stromadern, um eine geeignete Funktionserhaltdauer im Brandfall zu gewährleisten.

Im Übrigen sind Flachkabel nicht nur als Datenkabel verbreitet, sondern finden auch, etwa im Rahmen der Gebäudeinstallationstechnik, für Starkstromleitungen Verwendung. Unter "Starkstrom" wird in der vorliegenden Beschreibung Strom unter einer Spannung von wenigstens 100V (z.B. unter 120 V/60 Hz in Nordamerika, und 230 V/50 Hz in den meisten übrigen Ländern; Spannungsangaben beziehen sich auf jeweils eine Phase gegen Erde) zur Energieversorgung elektrischer Verbraucher verstanden; eine Starkstromader ist von den anderen Starkstromadern eines Kabels gegen solche Spannungen isoliert und typischerweise für Ströme von wenigstens 6A ausgelegt. Es sind auch Hybrid-Flachkabel mit Starkstromadern und Datenübertragungsadern bekannt (z.B. aus der EP 0 665 608 A2). Derartige Hybrid-Flachkabel sind ebenfalls als Flachkabel anzusehen.

Trotz dass das Flachkabel beim Installationssatz ein Brandsicherheitskabel ist, lässt sich der System-Funktionserhalt verbessern, z.B. mit einem Schutz dagegen, dass das Kabel auf einem (beliebigen) metallischen Objekt aufliegt und auf diese Weise durch die beim Brandfall geschwächte Aderisolation kurzgeschlossen wird. Deshalb ist bei manchen Ausgestaltungen das Textilgewebe elektrisch nichtleitend. So wird ein Kurzschließen über das Bett selbst (im Unterschied zu herkömmlichen Metall-Pritschen) verhindert. Zudem bildet bei einigen Ausgestaltungen das Textilgewebe eine elektrische isolierende Unterlage für das Kabel, die sich über die Länge der Kabelpritsche erstreckt. Dadurch wird eine elektrisch leitende Berührung zwischen den Aderleitern des Kabels und anderen elektrisch leitenden Objekten oder auch ein Kurzschluss eines Aderleiters gegen ein geerdetes Objekt verhindert. Solche Objekte sind beispielsweise metallische Teile der Kabelpritsche, wie etwa Befestigungsschrauben, die Pritschenhalterung, ein Metallgerüst, auf dem die Kabelpritsche montiert ist, oder andere metallische Objekte, wie Rohrleitungen, die in kurzer Distanz unter der Kabelpritsche verlegt sind, sodass es ohne dazwischen liegendem Textilgewebe beim Durchhängen des Kabels bzw. der Kabelpritsche im Brandfall zum Kontakt mit diesen kommen könnte.

Wie zuvor genannt, dient auch bei abgebranntem Harz das Textilgewebe zur Stützung des Kabels, indem das Textilgewebe wie eine Hängematte wirkt. Hierzu ist das Textilgewebe beispielsweise beidseitig jeweils in wenigstens einer Klemme der Befestigungseinrichtung eingeklemmt oder mit wenigstens einem (Wider-)Haken an dieser befestigt.

Gleichfalls wie Hängematten neigt auch das zwischen den Befestigungseinrichtungen aufgespannte Textilgewebe, zu dem aufliegenden Kabel hin (also auch quer zur Längsrichtung) durchzuhängen, d.h. sich mehr oder weniger rinnen- oder schlauchartig entlang des Kabels zu verformen und/oder eine teilweise zusammengefaltete Gestalt anzunehmen. Hierdurch erfahren die Aderleiter jedoch eine Kraft quer zur Leitungsrichtung, also aufeinander zu, sodass die Gefahr der Aderleiter-Berührung und somit die Kurzschlussgefahr steigt. Daher umfasst die Befestigungseinrichtung einen Querträger, an dem das Textilgewebe befestigt ist. Mit dem Querträger lässt sich die genannte Verformung des Textilgewebes reduzieren, indem es quer zur Längsrichtung (auf-) gespannt gehalten wird. Hierzu ist das Textilband an zumindest zwei, in Querrichtung beabstandeten Stellen am Querträger befestigt, z.B. mit Schrauben oder Haken.

Bei manchen Ausgestaltungen ist das Textilgewebe zumindest teilweise um den Querträger gewickelt, sodass sich durch die hierbei verstärkt auftretende Reibung zwischen Textilgewebe und Querträger die Befestigung zwischen diesen bei Zugbelastung entlasten lässt. Bei einigen dieser Ausgestaltungen ist das Textilgewebe um mindestens den halben, drei Viertel oder den vollen Umfang des Querträgers gewickelt. Bei einigen Ausgestaltungen ist das Textilgewebe sogar mindestens 1,5-, 2-, 3-, 4- oder 5-mal um den Querträger gewickelt. Mit zunehmender Umwicklung des Querträgers wird z.B. eine Schraube zum Halten des Textilgewebes zunehmend entlastet und dient dann zunehmend nur dem bloßen Sichern des Textilgewebes gegen Abfallen. Bei manchen Ausgestaltungen ist der Querträger zumindest teilweise gemeinsam mit dem Textilband in dem Harz eingegossen.

Bei manchen Ausgestaltungen ist der Querträger aus einem metallischen Material, bei anderen Ausgestaltungen aus einem elektrisch nicht leitenden, insbesondere isolierenden Material hergestellt, wobei jeweils der Querträger z.B. dickwandig oder massiv ausgeführt ist, um die Funktionserhaltdauer zu erzielen. Im Übrigen ist der Querträger beispielsweise zylindrisch, etwa als Rund- oder Vierkantstab oder alternativ auch als Rund- oder Vierkantrohr, ausgebildet.

Bei manchen Ausgestaltungen entspricht die Länge des Querträgers im Wesentlichen der Breite des Betts, sodass dieses über seine Gesamtbreite von dem Querträger getragen ist. Bei manchen Ausgestaltungen ist der Querträger länger als die Breite des Betts, sodass er zumindest auf einer Seite seitlich über das Bett hinausragt. Hieran, also an dem wenigstens einen Überstand des Querträgers über das Bett hinaus, ist bei manchen Ausgestaltungen die Kabelpritsche selbst montiert, z.B. indem die Pritschenhalterung(en) zum Montieren der Kabelpritsche an einer Decke, auf einem Boden und/oder an einer Wand an dem Überstand bzw. den Überständen befestigt wird bzw. werden.

Zum (brandsicheren) Verbinden des Textilgewebes mit der Befestigungseinrichtung, insbesondere mit dem Querträger, ist bei manchen Ausgestaltungen das Textilgewebe bezogen auf die Längsrichtung beidseitig mit einer Textilschlaufe ausgerüstet. Bei einigen Ausgestaltungen umgreift die Schlaufe den Querstab. Bei einigen Ausgestaltungen wird die Schlaufe gebildet, indem die Stirnseiten des Textilgewebes bezogen auf die Längsrichtung insgesamt umgeschlagen sind und so eine Schlaufe bilden, die sich z.B. über die Breite des Textilgewebes erstreckt. Hierbei lässt sich der umgeschlagene Bereich des Textilgewebes beispielsweise mit dem übrigen Bereich (der zur Abstützung des Kabels dient) vernähen. Alternativ lässt sich eine solche (stirnseitige) Schlaufe auch durch einen geeigneten Webprozess bei der Herstellung des Textilgewebes herstellen.

Anstatt der Schlaufe sind bei hierzu alternativen Ausgestaltungen im Textilgewebe (bezogen auf die Längsrichtung) beidseitig jeweils wenigstens zwei Löcher angeordnet, die quer zur Längsrichtung beabstandet sind. Hiermit lässt sich das Textilband z.B. an dem Querträger anschrauben, indem die Schrauben durch die Löcher des Textilbands geführt sind. Im Übrigen sind bei manchen Ausgestaltungen die Löcher verstärkt ausgeführt, also z.B. mit einer Naht entlang des Lochrands verstärkt, um ein Ausreißen der Löcher bei Belastung zu verhindern. Zudem lässt sich durch die mindestens zwei in Querrichtung beabstandeten Löcher, die hierbei zur Befestigung an mehreren beabstandeten Stellen dienen, die zuvor erläuterte schlauchartige Verformung reduzieren, indem das Textilband an wenigstens zwei beabstandeten Stellen in Querrichtung befestigt ist, was einem Zusammenfalten des Textilbandes entgegenwirkt.

Hinsichtlich der Auflage und der Abstützung des Kabels genügt in manchen Fällen eine flache, im Wesentlichen plane Form des Betts, beispielsweise eine Platte. Ein solches Bett bietet dem Kabel jedoch keinen Halt in seitlicher Richtung. Deshalb weist bei manchen Ausgestaltungen das Bett im Wesentlichen ein U-förmiges Querschnittsprofil zum Einlegen und seitlichen Führen des Kabels auf. Zudem erzielt das U-förmige Querschnittsprofil eine deutlich größere Biegefestigkeit, die auch vorteilhaft für die Handhabung der Pritsche vor oder während ihrer Montage ist, also bevor die Pritsche an oder auf Pritschenhalterungen befestigt ist.

Die Kabelpritsche mit dem Bett aus Textilgewebe zeigt im Brandfall nicht die Durchbiegung wie herkömmliche Metallblech-Pritschen, beginnt also nicht mit steigenden Temperaturen sich immer rascher durchzubiegen oder sogar zu fließen. Bei der Kabelpritsche mit Textilgewebe ist die Durchbiegung, genauer das Durchhängen, nach Abbrennen des Harzes im Wesentlichen durch die Last aufgrund des abgestützten Kabels sowie der Elastizität des Textilgewebes bestimmt. Daher ist bei manchen Ausgestaltungen das Textilgewebe im Wesentlichen unelastisch, gibt also bei Zugbelastung nur unwesentlich nach. Dies lässt sich durch die Gewebestruktur und/oder Material, Beschaffenheit und Länge der Gewebefasern realisieren.

Das feuerfeste Textilgewebe ist bei manchen Ausgestaltungen ein Glasfasergewebe, etwa ein Silikatgewebe, oder ein Karbonfasergewebe. Das Harz ist bei manchen Ausgestaltungen ein Polyesterharz, Epoxidharz oder Phenolharz. Bei manchen Ausgestaltungen ist die Kabelpritsche zum Funktionserhalt bis zu einer Temperatur von 700 °C, 900° C, 1100 °C, 1300° C oder höher vorgesehen. Hierbei wird allerdings in Kauf genommen, dass das Harz bei einigen Ausgestaltungen bereits bei niedrigeren Temperaturen abbrennt.

Trotz der besseren Eigenschaften hinsichtlich Durchbiegung, die das mit Textilgewebe aufgebaute Bett gegenüber herkömmlichen Metallblech-Pritschen im Brandfall zeigt, gibt das Bett beim Abbrennen des Harzes dennoch (geringfügig) nach. Um das Durchhängen der Kabelpritsche im Brandfall zusätzlich zu mindern, ist bei manchen Ausgestaltungen das Bett mit wenigstens einem Stützstab ausgerüstet. Solche Stützstäbe lassen sich entlang der Längsrichtung, der Querrichtung und/oder auch diagonal zum Bett ausrichten, um das Durchhängen entlang der Längs- und/oder Querrichtung zu verringern. Hierbei sind bei einigen Ausgestaltungen wenigstens zwei Stützstäbe in unterschiedlichen Richtungen angeordnet. Der wenigstens eine Stützstab ist z.B. gemeinsam mit dem Textilgewebe in dem Harz eingegossen. Bei einigen Ausgestaltungen ist der wenigstens eine Stützstab in das Textilgewebe eingeflochten oder eingewoben oder durch mehrere Schlaufen oder Schlitze des Textilgewebes geführt.

### Allgemeine Beschreibung der elektrischen Installation sowie deren fakultative Ausgestaltungen

Weitere Aspekte der Erfindung betreffen die elektrische Installation mit Funktionserhalt im Brandfall, bei der wenigstens eine zuvor oder nachfolgend beschriebene Kabelpritsche installiert und ein Flachkabel auf die Kabelpritsche aufgelegt wird. Dabei wird die Kabelpritsche montiert, indem ihre Befestigungseinrichtungen jeweils an einer Pritschenhalterung befestigt werden.

Bei manchen Ausgestaltungen ist pro Befestigungseinrichtung (der Kabelpritsche) genau eine Pritschenhalterung vorgesehen. Bei anderen Ausgestaltungen, bei denen wenigstens zwei Kabelpritschen in einer Reihe (entlang der Leitungsrichtung) angeordnet werden, werden benachbarte Befestigungseinrichtungen von benachbarten Kabelpritschen jeweils gemeinsam an einer Pritschenhalterung montiert. In diesem Fall werden also z.B. n Kabelpritschen (n sei die Anzahl der Kabelpritschen bei dieser Ausgestaltung) an n+1 Pritschenhalterungen montiert.

Da die Kabelpritsche, insbesondere das Textilgewebe, sich nach der Art einer Hängematte erstreckt, sind die Pritschenhalterungen zugfest ausgestaltet und außerdem auch zugfest befestigt, z.B. an einer Wand, einer Decke oder einem Boden. "Zugfest" heißt, dass zwei benachbarte Pritschenhalterungen derart konstruiert bzw. montiert sind, dass sich zwischen ihnen eine gewisse Zugspannung aufbauen lässt und dass sie sich hierbei nicht wesentlich aufeinander zu bewegen. Dadurch lässt sich das Textilgewebe mit hinreichender Spannkraft für ein geringes (unwesentliches) Durchhängen im Brandfall zwischen den benachbarten Pritschen (mittels der Befestigungseinrichtungen) nach der Art einer Hängematte aufspannen und auch bei Abbrennen des Harzes gespannt halten.

Das nur unwesentliche Durchhängen (besonders im Brandfall) des Betts gestattet es, dass bei manchen Ausgestaltungen die Kabelpritsche nur mit Pritschenhalterungen, die an den Befestigungseinrichtungen befestigt sind, montiert ist. Hierbei ist die Kabelpritsche also zwischen zwei benachbarten Pritschenhalterungen freitragend. Im Übrigen sind die Befestigungseinrichtungen, wie zuvor erläutert, jeweils an den Enden der Kabelpritsche in Längsrichtung angeordnet, sodass die Kabelpritsche also nur an zwei (distalen) Stellen durch Pritschenhalterungen getragen ist.

Zudem sind bei manchen Ausgestaltungen die Pritschenhalter entlang der Längsrichtung in deutlich größeren Abständen als bei herkömmlichen Kabelpritschen mit Funktionserhalt angeordnet, etwa mit einem gegenseitigen Abstand von 1 m, 1,2 m, 1,5 m, 1,8 m, 2 m oder einem noch größeren Abstand. Die Kabelpritsche selbst ist bei manchen Ausgestaltungen z.B. 1 m, 1,2 m, 1,5 m, 1,8 m, 2 m lang oder länger. Die Breite ihres Betts beträgt bei manchen Ausgestaltungen 10 cm, 20, cm, 30 cm, 40 cm, 50 cm, 60 cm oder mehr. Manche Ausgestaltungen besitzen wenigstens einen Steg oder Wulst aus in Harz eingegossenem Textilgewebe, der sich im Bett in Längsrichtung erstreckt. Hierdurch lassen sich benachbarte Kabel auf Abstand halten, etwa um im Brandfall eine gegenseitige Berührung der Aderleitern zu verhindern.

### Erläuterung der Zeichnung

Die angefügte Zeichnung veranschaulicht Ausführungsformen der verschiedenen Aspekte der Erfindung. In der Zeichnung zeigen jeweils als schematische, nicht maßstabsgerechte Darstellung:
Fig. 1 jeweils eine Seitenansicht in Längs- und Querrichtung der Kabelpritsche mit aufgelegtem Flachkabel im Normalbetrieb,
Fig. 2 die Kabelpritsche nach Figur 1 im Brandfall,
Fig. 3 und 4 unterschiedliche Varianten der Befestigungseinrichtung und
Fig. 5 und 6 die elektrische Installation des Installationssatzes mit der Kabelpritsche nach Fig. 1.

### Beschreibung von Ausführungsformen anhand der Zeichnung

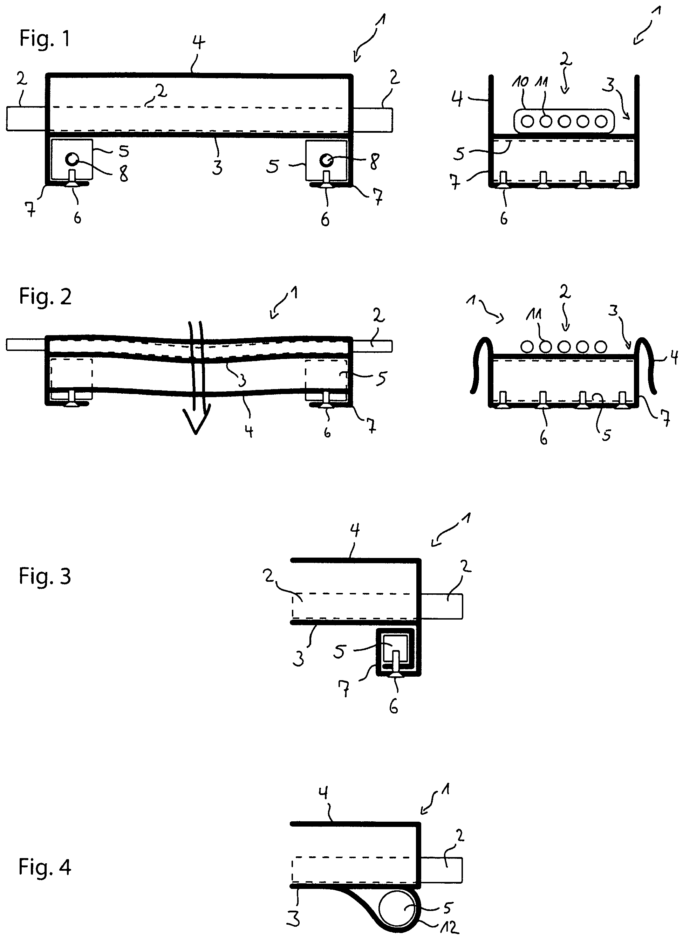

Die in Fig. 1 (links in Quer- und rechts in Längsrichtung gesehen) gezeigte Kabelpritsche 1 dient zum Verlegen von Kabeln und/oder Kabelbündel, z.B. dem Flachkabel 2, das ein Brandsicherheitskabel ist. Hierbei ist die Kabelpritsche 1 alleine aber auch als System zusammen mit dem Flachkabel 2 und den Pritschenhalterungen (9, 9a, 9b) für Funktionserhalt im Brandfall ausgerüstet, wie nachfolgend erläutert wird.

Die Kabelpritsche 1 ist 2 m lang und 20 cm breit, wobei das Bett 3 ein U-förmiges Querschnittsprofil besitzt, das einen Kanal mit etwa 10 cm hohen Seitenwänden 4 (die U-Schenkel des Querschnittprofils) zum Einlegen des Flachkabels 2 bildet. Das Bett 3 ist aus Textilgewebe hergestellt, das in Harz eingegossen ist. Wie zuvor genannt, sind die Figuren 1 bis 7 nicht maßstabsgerecht. Auch zeigen sie bloße schematische, symbolhafte Darstellungen, bei der z.B. nur manche verdeckten Teile dargestellt sind.

Die Kabelpritsche 1 besitzt an ihren Enden (bezogen auf die Längsrichtung) jeweils einen Querträger 5 als Befestigungseinrichtung, nämlich einen Vierkantstab aus Stahl mit einer Länge von 20 cm. Der Querträger 5 ist quer zur Längsrichtung mittels Schrauben 6 mit dem Bett 2 verbunden und erstreckt sich über die Breite des Betts 3. Dementsprechend ist das Textilgewebe beidseitig mit einem Fortsatz 7 (der als Abwicklung des Textilgewebes betrachtet die Form einer Lasche besitzt) versehen, sodass sich das Bett 3 über den Kanal hinaus nach unten erstreckt, um den Querträger 5 insgesamt zu etwa drei Viertel seines Umfangs zu umschließen.

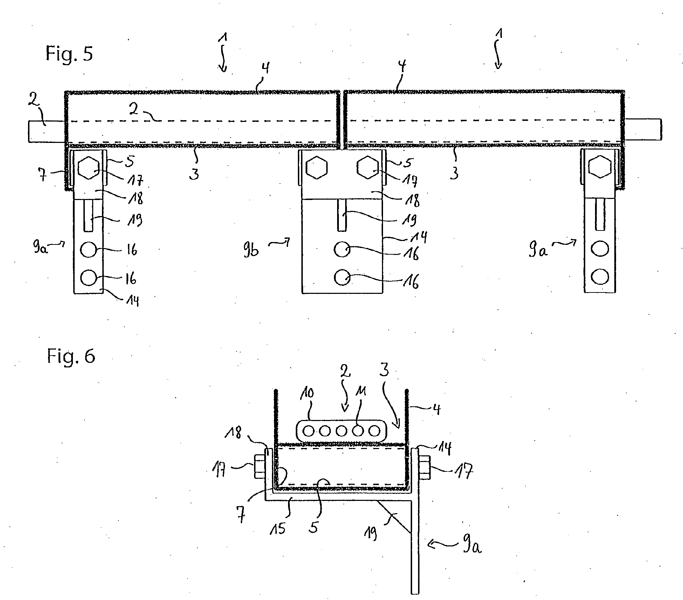

Der Querträger 5 dient einerseits als Befestigungseinrichtung, um die Kabelpritsche 1, wie später in Figur 6 und 7 erläutert, zu montieren. Andererseits dient er dazu, das Bett 3, also im Wesentlichen das Textilgewebe, nach der Art einer Hängematte zum Abstützen des Flachkabels 2 aufzuspannen, sobald im Brandfall das Harz abbrennt. Im Normalbetrieb, bei dem das Harz (noch) nicht abgebrannt ist, ist das Bett 3 aufgrund seines U-förmigen Querschnittprofils selbsttragend, da das Textilgewebe durch das Harz versteift ist. Hierbei ruht das Bett 3 also aufgelegt auf den Querträgern 5 und der Hängematteneffekt spielt im Normalbetrieb nur eine unwesentliche Rolle.

Zwar ist das Bett 3 im Normalbetrieb in Längsrichtung durch Formschluss der Fortsätze 7 mit den Querträgern 5 gehalten. Jedoch ist für die Befestigung zusätzlich das Textilgewebe (mit Senkkopf-Schrauben 6) mit den Querträgern 5 verschraubt. Hierdurch wird einerseits ein seitliches Abrutschen (in Querrichtung) des Betts 3 von den Querträgern 5 verhindert. Andererseits sind die Schrauben im Wesentlichen (auch) für den Brandfall vorgesehen, da nach Abbrennen des Harzes das Bett 3 (auch) im Bereich der Fortsätze 7 seine selbsttragende Form verliert und das Textilgewebe von den Querträgern 5 in Längsrichtung abrutschen würde.

Hierzu ist das Textilgewebe jeweils mit Löchern zum Durchführen der Schrauben 6 versehen, deren Lochränder ähnlich einem Knopfloch bei üblicher Textilbekleidung gegen Ausreißen verstärkt sind.

Ferner besitzen die Querträger 5 jeweils beidseitig stirnseitige Gewindelöcher 8, die zur Befestigung der Kabelpritsche 1 an Pritschenhalterungen 9a, 9b (siehe Figur 6 und 7) vorgesehen sind.

Das Bett 3 ist aus einem Glasfasergewebe hergestellt, das in einem Polyesterharz eingegossen ist. Das Glasfasergewebe ist bis zu einer Temperatur von mindestens 1300 °C feuerbeständig, sodass das Bett 3 bis mindestens 1300° C zum Abstützen des aufliegenden Flachkabels 2 geeignet ist. Allerdings brennt das Polyesterharz bei wesentlich niedrigeren Temperaturen ab.

Der Brandfall, genauer die Kabelpritsche 1 im Brandfall, ist in Figur 2 dargestellt, wobei die hier dargestellte Situation auch denjenigen zeitlich nach dem Brandfall entspricht. Im Brandfall brennt das Harz ab, sodass dann das Bett 3 nicht mehr aus dem Verbundmaterial aus Textilgewebe und Harz sondern im Wesentlichen nur noch aus dem Textilgewebe aufgebaut ist. Daher geht im Brandfall die Steifigkeit des Betts 3 verloren und es wird entsprechend den Eigenschaften des bloßen Textilgewebes flexibel.

Dies führt dazu, dass im Brandfall die selbsttragende Eigenschaft des Betts 3 wegfällt, sodass dann der Hängematteneffekt zur Geltung kommt. Dementsprechend hängt das Bett 3 im Brandfall, wie durch den Pfeil in Figur 2 angedeutet, entlang seiner Längsrichtung geringfügig durch, wobei der Grad des Durchhängens im Wesentlichen durch die Elastizität des Textilgewebes, durch das Gewicht des aufliegenden Flachkabels 2 und die Länge der Kabelpritsche 1 geprägt ist. Für geringes Durchhängen ist daher die Gewebestruktur so gewählt, dass das Textilgewebe praktisch unelastisch ist, sich also unter Zugspannung nur geringfügig dehnt.

Dementsprechend erfährt auch das abgestützte Flachkabel 2 bloß eine unwesentliche Durchbiegung, wenn das Bett 3 beim Brandfall in seinen durchhängenden Zustand übergeht. Aufgrund des bloß geringfügigen Durchhängens und daraus resultierenden Durchbiegens, bleiben jedoch mechanische Spannungen innerhalb des Flachkabels 2 gering. Dadurch wird eine Verwerfung der Aderleiter 11 vermieden, und damit auch ein Kurzschluss. Dies sichert im Brandfall den Funktionserhalt des Flachkabels 2 sowie des gesamten Systems.

Wie rechts in Figur 2 dargestellt (Ansicht in Längsrichtung gesehen), verlieren auch die Seitenwände 4 ihre Tragkraft und hängen daher nach unten. Trotzdem behält das Bett 2 hinreichend Tragkraft zum Abstützen des Flachkabels 2, da es durch die Querträger in Längsrichtung unter (mechanischer) Spannung gehalten wird (Hängematteneffekt). Zudem wird das Bett 3 in Querrichtung von den Querträgern 5 und den daran entlang angeordneten Schrauben 6 so aufgespannt, dass es sich nicht (z.B. wegen des aufliegenden Flachkabels 2) entlang der Längsrichtung im Bereich der Auflagefläche des Flachkabels 2 zusammenfaltet, sondern weiterhin eine im Wesentlichen flache Auflage für das Flachkabel 2 bildet. Dadurch wird eine seitlich wirkende Kraft verhindert, welche die Aderleiter 11 aufeinander zu bewegt.

Bei manchen weiteren Ausführungsbeispielen sind in dem Bett zudem mehrere Stützstäbe in dem Harz eingegossen, die unterhalb des Textilgewebes angeordnet sind und/oder mit diesem Verflochten sind. Bei einigen Ausführungsbeispielen verlaufen die Stützstäbe in Längsrichtung, bei anderen Ausführungsbeispielen in Querrichtung. Hierbei verringern die Stützstäbe das Durchhängen des Textilgewebes, also des Betts 3, in der jeweiligen Richtung insbesondere im Brandfall, wenn das Harz abgebrannt ist.

Im Brandfall brennt außer dem Harz auch die Isolierung 10 des Flachkabels 2 ab. Da das Flachkabel 2 ein Brandsicherheitskabel ist, sind bei diesem eine oder mehrere Vorkehrungen gegen gegenseitiges Berühren und somit Kurzschließen der Aderleitern 11 des Flachkabels 2 getroffen. Hierzu sind in der Isolierung 10 z.B. zwischen den Aderleitern 11 Stege aus feuerfestem Material eingeschlossen, die eine seitliche Bewegung der Aderleiter 11 aufeinander zu verhindern.

Ungeachtet dieser Schutzmöglichkeiten, ist das Textilgewebe elektrisch isolierend (Glasfasergewebe), sodass das Bett 3 eine (daher ggf. zusätzliche) Isolierung des Flachkabels 2 bildet. Diese Isolierung schützt z.B. vor Kontakt der Aderleiter 11 mit den metallischen und daher elektrisch leitenden Querträgern 5. Hierdurch könnte andernfalls ein Kurzschluss zwischen den Aderleitern 11 selbst oder auch zwischen einem Aderleiter 11 und einer Erdung des Querträgers 5 entstehen. Auch dadurch trägt das Textilgewebe also zum Funktionserhalt des Systems bei.

Bevor die Installation des Installationssatzes mit Kabelpritschen 1, Pritschenhaltern 9, 9a, 9b und Flachkabel 2 beschrieben wird, sind in den Figuren 3 bis 5 weitere Ausführungsbeispiele gezeigt. Diese Varianten unterscheiden sich im Wesentlichen in der Befestigungseinrichtung von der zuvor beschriebenen Kabelpritsche 1.

Bei einer ersten Variante ist das (in Harz eingegossene) Textilgewebe gemäß Figur 3 um die Querträger 5 mit den Fortsätzen 7 gewickelt, und zwar mit etwa 1,5 Umwicklungen. Andere Ausführungsbeispiele zeigen stattdessen etwa 2, 3, 5 oder mehr Umwicklungen. Insgesamt lässt sich die Reibung zwischen Textilgewebe und Querträger 5 vergrößern und dadurch die Zugspannung im Textilgewebe im Bereich der Schrauben 6 reduzieren, um etwa ein Reißen des Textilgewebes verhindern. Die Schraube dient mit zunehmender Umwicklung dann zunehmend bloß zum Sichern des Textilgewebes gegen Abfallen vom Querträger 5.

Bei einer zweiten Variante sind die Querträger 5 von jeweils einer oder auch mehreren Schlaufen 12 umschlungen, die an den Stirnseiten (bezogen auf die Längsrichtung) der Kabelpritsche 1 durch das Textilgewebe gebildet sind. Hierzu sind z.B. gemäß Figur 4 die Fortsätze 7 umgeschlagen und etwas beabstandet zu den Stirnseiten mit dem Textilgewebe vernäht. Dadurch lässt sich die Spannkraft aufgrund des Hängematteneffekts gleichmäßig über die Breite des Betts 3 verteilen und es sind keine Schrauben 6 nötig, um das Textilgewebe am jeweiligen Querträger 5 zu befestigen. Gleichwohl lässt sich auch bei einer Schlaufe das Textilgewebe über eine Schraube gegen seitliches Abrutschen vom Querträger 5 sichern. Im Übrigen zeigt dieses Ausführungsbeispiel einen Querträger 5 mit rundem Querschnittsprofil. Bei anderen Ausführungsbeispielen ist stattdessen ein ovales, dreieckiges, rechteckiges, fünf- oder sechseckiges Querschnittsprofil realisiert.

Nachfolgend wird die in den Figuren 5 und 6 dargestellte elektrische Installation des Installationssatzes mit Kabelpritschen 1, Pritschenhaltern 9a, 9b und Flachkabel 2 beschrieben. Bei diesem Ausführungsbeispiel werden bei der Installation Kabelpritschen 1 gemäß des in den Figuren 1 und 2 gezeigten Ausführungsbeispiels verwendet. Zwar richtet sich die folgende Beschreibung hauptsächlich auf mechanische Aspekte, doch sind die Kabelpritschen 1 für den elektrischen Funktionserhalt des Flachkabels 2 im Brandfall vorgesehen, sodass der Funktionserhalt des Systems, das den Installationssatz umfasst, ebenfalls in elektrischer Hinsicht zu verstehen ist.

In Figur 5 sind exemplarisch zwei Kabelpritschen 1 in Längsrichtung hintereinander montiert und das Flachkabel 2 auf diese aufgelegt, sodass es durch die Betten 3 der Kabelpritschen 1 abgestützt ist. Hierbei sind die Kabelpritschen 1 mit Pritschenhalterungen 9a, 9b an einer Wand montiert, sodass die Kabelpritschen 1 (und auch das Flachkabel 2) parallel zur Wand verlaufen.

Die Pritschenhalterung 9b unterscheidet sich von den Pritschenhalterungen 9a dadurch, dass sie mit breiterer Bauform ausgeführt ist, sodass sie zur gleichzeitigen Befestigung von zwei Befestigungseinrichtungen, hier also zwei Querträgern 5, ausgerüstet ist. Hierbei sind diese zwei Befestigungseinrichtungen jeweils von benachbarten Kabelpritschen 1. Somit dient die Pritschhalterung 9b in diesem Ausführungsbeispiel gleichzeitig zum Verbinden und Halten zweier Kabelprischen 1. Hingegen sind die Pritschenhalterungen 9a nur zur Befestigung an jeweils einer einzelnen Befestigungseinrichtung ausgerüstet. Diese Bauart wird daher jeweils für die erste und letzte Befestigungseinrichtung der ersten bzw. letzten Kabelpritsche 1 der Reihe verwendet.

Nachfolgend wird daher nur die Pritschenhalterung 9a beschrieben, wobei das Folgende auch auf die Pritschenhalterung 9b zutrifft. Die Pritschenhalterung 9a besitzt einen vertikalen Schenkel 14 für die Wandmontage und einen horizontalen Schenkel 15 zum Tragen der Kabelpritsche 1, wobei beide Schenkel 14, 15 aus Flachstahl gefertigt sind, der aufgrund seiner Dimensionierung den Funktionserhalt gewährleistet.

Der vertikale Schenkel 14 ist mit zwei Bohrungen 16 versehen, um die Pritschenhalterung 9a an der Wand festzuschrauben. Am horizontalen Schenkel 15 ist gegenüberliegend vom vertikalen Schenkel 14 eine vertikale Platte 18 mit einer Bohrung angeordnet. Bei der Installation wird die Kabelpritsche 1 mit ihrer Befestigungseinrichtung, also insbesondere mit dem Querträger 5, zwischen dem vertikalen Schenkel 14 und der vertikalen Platte 18 auf dem horizontalen Schenkel 15 aufgelegt und durch die Bohrung der vertikalen Platte 18 sowie einer weiteren Bohrung im vertikalen Schenkel 14 hindurch mit Schrauben 17 an den stirnseitigen Gewindelöchern 8 festgeschraubt. Ferner sind die Pritschenhalter 9a mit einer Aussteifung 19 verstärkt.

Insgesamt sind bei der Installation die Kabelpritschen 1 jeweils nur an ihren Enden, nämlich an den Querträgern 5, abgestützt, mit denen sie auf den Pritschenhaltern 9a, 9b montiert sind. Daher sind die Kabelpritschen 1 dazwischen freitragend, also ohne weitere mechanische Abstützung montiert. Trotz der großen Spannweite von etwa 2 m pro Kabelpritsche 1 werden bei dem gezeigten Ausführungsbeispiel also für zwei Kabelpritschen 1 nur drei Pritschenhalterungen 9a, 9b verwendet. Hierbei entspricht der Abstand benachbarter Pritschenhalterungen 9a, 9b näherungsweise (bis auf deren Breite) der Länge der Kabelpritschen 1.

Im Übrigen sind Material und Querschnitt des Querträgers 5 und auch der Pritschenhalterungen (9, 9a, 9b) so gewählt, dass diese über den Temperaturbereich bis 1300° C die erforderliche Spannkraft für das Textilgewebe aufbringen bzw. die Kabelpritschen 1 sicher tragen können. Ferner sind die Pritschenhalter 9, 9a, 9b in Längsrichtung zugfest, sodass sie die Zugspannung des Textilgewebes aufbringen ohne wesentlich nachzugeben, wenn im Brandfall die Gewichtskraft des Flachkabels 2 auf dem harzfreien, zwischen den Querträgern 5 gespannten Textilgewebe ruht.

## Patentansprüche

1. Kabelpritsche (1) mit Funktionserhalt im Brandfall,
wobei die Kabelpritsche (1) ein Bett (3) zum Auflegen und Abstützen eines oder mehrerer Kabel (2) umfasst, welches Bett (3) sich über die Länge der Kabelpritsche (1) erstreckt, und wobei das Bett (3) ein feuerfestes Textilgewebe umfasst, **dadurch gekennzeichnet, dass**
das Bett (3) aus feuerfestem Textilgewebe aufgebaut ist, das in Harz eingegossen ist, und
das Textilgewebe bezogen auf die Längsrichtung der Kabelpritsche (1) beidseitig mit einem brandfesten Querträger (5) versehen und an diesem brandsicher befestigt ist,
wobei sich das Textilgewebe bei abgebranntem Harz zwischen den Querträgern (5), an denen es brandsicher befestigt ist, nach Art einer Hängematte erstreckt und das bzw. die Kabel (2) weiterhin unterstützt.

2. Kabelpritsche (1) nach Anspruch 1, wobei das Textilgewebe elektrisch nichtleitend ist und bei abgebranntem Harz somit eine elektrische isolierende Unterlage für das bzw. die Kabel (2) bildet, die sich über die Länge der Kabelpritsche (1) erstreckt.

3. Kabelpritsche (1) nach Anspruch 1 oder 2, wobei die Querträger (5) metallische Querträger sind.

4. Kabelpritsche (1) nach einem der Ansprüche 1 bis 3, wobei das Textilgewebe bezogen auf die Längsrichtung beidseitig mit einer Textilschlaufe (12) ausgerüstet ist.

5. Kabelpritsche (1) nach einem der Ansprüche 1 bis 3, wobei im Textilgewebe bezogen auf die Längsrichtung beidseitig jeweils wenigstens zwei Löcher angeordnet sind, die quer zur Längsrichtung beabstandet sind, und mit an denen das Textilgewebe am Querträger (5) befestigt ist.

6. Kabelpritsche (1) nach einem der Ansprüche 1 bis 5, wobei das Bett (3) im Wesentlichen ein U-förmiges Querschnittsprofil zum Einlegen und seitlichen Führen des Kabels (2) aufweist, wobei sich das Textilgewebe im Bereich beider Schenkel (4) und des Verbindungsstegs des U-förmigen Querschnittprofils erstreckt.

7. Kabelpritsche (1) nach einem der Ansprüche 1 bis 6, wobei das Textilgewebe im Wesentlichen ein Glasfasergewebe, etwa ein Silikatgewebe, ist.

8. Kabelpritsche (1) nach einem der Ansprüche 1 bis 7, wobei das Harz Polyesterharz, Epoxidharz oder Phenolharz ist.

9. Kabelpritsche (1) nach einem der Ansprüche 1 bis 8, wobei die Kabelpritsche (1) mit wenigstens einem Stützstab zum Stützen des Betts (3) ausgerüstet ist, der bzw. die in Längsrichtung und/oder in Querrichtung ausgerichtet ist bzw. sind.

10. Kabelpritsche (1) nach einem der Ansprüche 1 bis 9, wobei die Kabelpritsche (1) zum Funktionserhalt bis zu einer Temperatur von 1300 °C vorgesehen ist.

11. Installationssatz für eine elektrische Installation mit Funktionserhalt im Brandfall,
mit wenigstens einer Kabelpritsche (1) nach einem der Ansprüche 1 bis 9,
mit wenigstens einem Flachkabel (2) mit mehreren, parallel nebeneinander in einer Ebene verlaufenden Stromadern (11), wobei das Flachkabel (2) ein Brandsicherheitskabel mit Funktionserhalt im Brandfall ist, und
mit wenigstens zwei Pritschenhalterungen (9, 9a, 9b) zum Montieren der wenigstens einen Kabelpritsche (1), wobei die Pritschenhalterungen (9, 9a, 9b) zur Befestigung an den Querträgern (5) vorgesehen sind.

12. Elektrische Installation mit Funktionserhalt im Brandfall, umfassend einen Installationssatz nach Anspruch 11,
wobei das Flachkabel (2) auf der Kabelpritsche (1) aufliegt und
wobei die wenigstens eine Kabelpritsche (1) montiert ist, indem sie mit den Querträgern (5) jeweils an einer Pritschenhalterung (9, 9a, 9b) befestigt ist.

13. Elektrische Installation nach Anspruch 12, die eine Vielzahl von Kabelpritschen (1) umfasst, die mit Pritschenhalterungen (9a, 9b) montiert sind, wobei jeweils benachbarte Kabelpritschen (1) mit einer gemeinsamen Pritschenhalterung (9a, 9b) montiert sind.

14. Elektrische Installation nach Anspruch 12 oder 13, wobei die Kabelpritsche (1) nur mit Pritschenhalterungen (9, 9a, 9b), die an den Querträgern (5) befestigt sind,
montiert ist, sodass die Kabelpritsche (1) dazwischen freitragend ist.

## Claims

1. Cable tray (1) having sustained functionality in the case of fire, wherein the cable tray (1) comprises a bed (3) for placing and supporting one or a plurality of cables (2), the bed (3) extending across the length of the cable tray (1), and wherein the bed (3) comprises a fire-resistant woven textile fabric,
**characterized in that**
the bed (3) is constructed from a fire-resistant woven textile fabric which is cast in resin, and the woven textile fabric in relation to the longitudinal direction of the cable tray (1) is on both sides provided with a fire-resistant transverse support (5) and is fastened to the latter in a fire-proof manner,
wherein the woven textile fabric in the case of a burnt resin extends in a hammock-type manner between the transverse supports (5) to which said woven textile fabric is fastened in a fire-proof manner, and continues to support the cable or cables (2), respectively.

2. Cable tray (1) according to Claim 1, wherein the woven textile fabric is not electrically conducting and in the case of a burnt resin thus forms an electrically isolating underlay for the cable or cables (2), respectively, that extends across the length of the cable tray (1).

3. Cable tray (1) according to Claim 1 or 2, wherein the transverse supports (5) are metallic transverse supports.

4. Cable tray (1) according to one of Claims 1 to 3, wherein the woven textile fabric in relation to the longitudinal direction is on both sides equipped with a textile loop (12).

5. Cable tray (1) according to one of Claims 1 to 3, wherein at least two holes which are spaced apart transversely to the longitudinal direction are disposed in the woven textile fabric on each of both sides in relation to the longitudinal direction, by way of which holes the woven textile fabric is fastened to the transverse support (5).

6. Cable tray (1) according to one of Claims 1 to 5, wherein the bed (3) has substantially a U-shaped cross-sectional profile for inserting and laterally guiding the cable (2), wherein the woven textile fabric extends in the region of both legs (4) and of the connection web of the U-shaped cross-sectional profile.

7. Cable tray (1) according to one of Claims 1 to 6, wherein the woven textile fabric is substantially a woven glass-fibre fabric such as a woven silicate fabric.

8. Cable tray according to one of Claims 1 to 7, wherein the resin is polyester resin, epoxy resin, or phenolic resin.

9. Cable tray (1) according to one of Claims 1 to 8, wherein the cable tray (1) is equipped with at least one support bar for supporting the bed (3), which support bar or bars, respectively, is/are aligned in the longitudinal direction and/or the transverse direction.

10. Cable tray (1) according to one of Claims 1 to 9, wherein the cable tray (1) is provided for sustained functionality up to a temperature of 1300°C.

11. Installation kit for an electrical installation having sustained functionality in the case of fire,
having at least one cable tray (1) according to one of Claims 1 to 9,
having at least one ribbon cable (2) having a plurality of current cores (11) that run in parallel beside one another in one plane, wherein the ribbon cable (2) is a fire-safety cable having sustained functionality in the case of fire, and having at least two tray mountings (9, 9a, 9b) for fitting the at least one cable tray (1), wherein the tray mountings (9, 9a, 9b) are provided for fastening to the transverse supports (5).

12. Electrical installation having sustained functionality in the case of fire, comprising an installation kit according to Claim 11,
wherein the ribbon cable (2) bears on the cable tray (1), and
wherein the at least one cable tray (1) is fitted in that the latter by way of the transverse supports (5) is in each case fastened to a tray mounting (9, 9a, 9b).

13. Electrical installation according to Claim 12, which comprises a multiplicity of cable trays (1) which are fitted by way of tray mountings (9a, 9b), wherein adjacent cable trays (1) in each case are fitted by way of a common tray mounting (9a, 9b).

14. Electrical installation according to Claim 12 or 13, wherein the cable tray (1) is fitted only by way of tray mountings (9, 9a, 9b) which are fastened to the transverse supports (5) such that the cable tray (1) therebetween is self-supporting.

## Revendications

1. Chemin de câbles (1) à fonctionnalité maintenue en cas d'incendie,
où ledit chemin de câbles (1) comprend un bâti (3) pour la pose et le support d'un ou de plusieurs câbles (2), ledit bâti (3) s'étendant sur la longueur du chemin de câbles (1),
et où le bâti (3) est constitué d'un tissu textile ignifuge,
**caractérisé en ce que**
le bâti (3) est constitué d'un tissu textile ignifuge moulé dans de la résine, et **en ce que** le tissu textile est pourvu d'une traverse (5) résistante au feu sur ses deux côtés par rapport au sens de la longueur du chemin de câbles (1), et est fixé à celle-ci de manière coupe-feu,
le tissu textile s'étendant à la façon d'un hamac entre les traverses (5), auxquelles il est fixé de manière coupe-feu, et continuant à supporter le ou les câbles (2), en cas de résine brûlée.

2. Chemin de câbles (1) selon la revendication 1, où le tissu textile n'est pas électriquement conducteur et forme ainsi en cas de résine brûlée un substrat électriquement isolant pour le ou les câbles (2) qui s'étend sur la longueur du chemin de câbles (1).

3. Chemin de câbles (1) selon la revendication 1 ou 2, où les traverses (5) sont des traverses métalliques.

4. Chemin de câbles (1) selon l'une des revendications 1 à 3, où le tissu textile est pourvu d'une boucle textile (12) sur chaque côté par rapport au sens de la longueur.

5. Chemin de câbles (1) selon l'une des revendications 1 à 3, où au moins deux trous sont présentés dans le tissu textile sur chaque côté par rapport au sens de la longueur, lesquels sont espacés transversalement au sens de la longueur, et au moyen desquels le tissu textile est fixé sur la traverse (5).

6. Chemin de câbles (1) selon l'une des revendications 1 à 5, où le bâti (3) présente un profil de section transversale sensiblement en U pour la pose et le guidage latéral du câble (2), le tissu textile s'étendant dans la zone des deux ailes (4) et de la barre de liaison du profil de section transversale en U.

7. Chemin de câbles (1) selon l'une des revendications 1 à 6, où le tissu textile est sensiblement un tissu de fibres de verre, tel que de la laine de silice.

8. Chemin de câbles (1) selon l'une des revendications 1 à 7, où la résine est une résine polyester, une résine époxy ou une résine phénolique.

9. Chemin de câbles (1) selon l'une des revendications 1 à 8, où ledit chemin de câbles (1) est pourvu d'au moins une barre d'appui pour le support du bâti (3), s'étendant dans le sens de la longueur et/ou dans le sens transversal.

10. Chemin de câbles (1) selon l'une des revendications 1 à 9, où ledit chemin de câbles (1) est prévu avec une fonctionnalité maintenue jusqu'à une température de 1 300 °C.

11. Kit d'installation pour une installation électrique à fonctionnalité maintenue en cas d'incendie, avec au moins un chemin de câbles (1) selon l'une des revendications 1 à 9,
avec au moins un câble plat (2) comprenant plusieurs brins (11) s'étendant parallèlement entre eux sur le même plan, ledit câble plat (2) étant un câble résistant au feu à fonctionnalité maintenue en cas d'incendie, et
avec au moins deux supports (9, 9a, 9b) de chemin de câbles pour le montage dudit au moins un chemin de câbles (1), lesdits supports (9, 9a, 9b) de chemin de câbles étant prévus pour être fixés contre les traverses (5).

12. Installation électrique à fonctionnalité maintenue en cas d'incendie, comprenant un kit d'installation selon la revendication 11,
où le câble plat (2) repose sur le chemin de câbles (1) et
où ledit au moins un chemin de câbles (1) est monté en étant fixé par ses traverses (5) contre des supports (9, 9a, 9b) de chemin de câbles respectifs.

13. Installation électrique selon la revendication 12, comprenant une pluralité de chemins de câbles (1) montés avec des supports (9a, 9b) de chemin de câbles, où des chemins de câbles (1) contigus sont montés avec un support (9a, 9b) de chemin de câbles commun.

14. Installation électrique selon la revendication 12 ou 13, où le chemin de câbles (1) n'est monté qu'avec des supports (9, 9a, 9b) de chemin de câbles fixés contre les traverses (5), de sorte que le chemin de câbles (1) est en porte-à-faux entre ceux-ci.
